# EUROPÄISCHE PATENTANMELDUNG

(11) **EP 4 778 377 A1**
(43) Veröffentlichungstag der Anmeldung: **22.07.2026**
(21) Anmeldenummer: 25219844.5
(22) Anmeldetag: 01.12.2025
(51) Int. Cl.: A01C 17/00

(54) **SCHEIBENSTREUER MIT EINEM AUSLAUFSCHACHT**

(30) Priorität: 20.01.2025 DE 202025100275 U
(71) Anmelder: RAUCH Landmaschinenfabrik GmbH, 77836 Rheinmünster (DE)
(72) Erfinder: Valentin, Jean-Baptiste, 67000 Strasbourg (FR); Knopf, Marius, 77833 Ottersweier-Unzhurst (DE)
(74) Vertreter: Lichti - Patentanwälte Partnerschaft mbB

(57) **Zusammenfassung**

Es wird ein Scheibenstreuer (1) zum Verteilen von Verteilgut vorgeschlagen, welcher einen Vorratsbehälter (7) zur Aufnahme des Verteilgutes mit einer Auslauföffnung (12), ein der Auslauföffnung des Vorratsbehälters nachgeordnetes Dosierorgan mit einer Dosieröffnung (15) sowie eine unterhalb der Dosieröffnung angeordnete, um eine Drehachse rotierbare Verteilerscheibe (3,4) umfasst. Von der Dosieröffnung erstreckt sich ein Auslaufschacht (10,11) nach unten in Richtung der Verteilerscheibe, welcher zumindest einen Umfangsabschnitt der Dosieröffnung umgibt, um das herabfallende Verteilgut vor äußeren Einwirkungen zu schützen. Es ist vorgesehen, dass sich der Auslaufschacht an seinem der Verteilerscheibe zugewandten, freien Ende im Wesentlichen vollumfänglich um die Dosieröffnung herum erstreckt, wobei der Auslaufschacht im Bereich seines der Verteilerscheibe abgewandten Endes einen zum Druckausgleich dienenden Durchlass aufweist.

## Beschreibung

Die Erfindung betrifft einen Scheibenstreuer zum Verteilen von Verteilgut, mit einem Vorratsbehälter zur Aufnahme des Verteilgutes mit wenigstens einer Auslauföffnung, wenigstens einem, der Auslauföffnung des Vorratsbehälters nachgeordneten Dosierorgan mit einer Dosieröffnung und wenigstens einer unterhalb der Dosieröffnung angeordneten, um eine Drehachse rotierbaren Verteilerscheibe, wobei sich von der Dosieröffnung nach unten in Richtung der Verteilerscheibe ein Auslaufschacht erstreckt, welcher zumindest einen Umfangsabschnitt der Dosieröffnung umgibt.

Scheiben- oder Schleuderstreuer sind einerseits in Form von landwirtschaftlichen Maschinen zum Ausbringen von pulver- oder partikelförmigen Verteilgut, wie insbesondere Dünger oder Saatgut, in vielfältiger Ausgestaltung bekannt, so beispielsweise in gezogener Bauart als Selbstläufer oder von einem Dreipunkt-Kraftheber einer Zugmaschine, wie eines Traktors, aufgenommener Bauart. Sie umfassen einen das auszubringende Verteilgut aufnehmenden Vorratsbehälter, an dessen Unterseite üblicherweise eine oder zwei Auslauföffnungen angeordnet sind, wobei der jeweiligen Auslauföffnung je ein Dosierorgan mit einer zumindest mit einem Ausschnitt der Auslauföffnung fluchtenden Dosieröffnung zugeordnet ist, um das Verteilgut in der gewünschten Menge - oder genauer: mit dem gewünschten Massenstrom - dem Vorratsbehälter zu entnehmen. Das üblicherweise unterhalb der Auslauföffnung positionierte Dosierorgan ist entweder manuell oder insbesondere aktuatorisch, z.B. mittels Stellzylindern, Servomotoren oder dergleichen, auf- und zusteuerbar, um je nach gewünschter Verteilgutmenge pro Flächeneinheit, je nach gewünschter Verteilungsbreite des auszubringenden Verteilgutes auf dem Boden, je nach Fahrgeschwindigkeit und je nach den physikalischen Eigenschaften des Verteilgutes, wie beispielsweise dessen Rieselfähigkeit, den gewünschten Massenstrom einstellen zu können. Unterhalb der Dosieröffnung des Dosierorgans befindet sich die in der Regel mit Wurfflügeln bzw. -schaufeln bestückte Verteilerscheibe, mittels welcher das Verteilgut über die gewünschte Arbeitsbreite verteilt wird und welche um eine üblicherweise etwa vertikale Drehachse rotierbar ist, sei es durch Anschließen eines Antriebsstrangs der Verteilerscheibe an die Zapfwelle einer Zugmaschine, wie eines Traktors, oder sei es mittels eines eigenen Antriebs der Verteilerscheibe, wie beispielsweise eines Hydromotors, eines Elektromotors oder dergleichen.

Moderne Scheibenstreuer sind überdies mit einer Einrichtung zur Verstellung des Aufgabepunktes des Verteilgutes auf die Verteilerscheibe ausgestattet, wobei der Aufgabepunkt in Bezug auf das Verteilorgan radial (insbesondere zu Vergrößerung/Verkleinerung des Streufächers) und/oder in Umfangsrichtung (insbesondere zum Verdrehen des Streufächers etwa um die Drehachse des Verteilorgans) verstellbar sein kann. Die Einrichtung zur Verstellung des Aufgabepunktes weist hierbei entweder eine oder mehrere Handhaben zur manuellen Verstellung des Aufgabepunktes oder einen oder mehrere Aktuatoren auf, welche gleichfalls z.B. Stellzylinder, Servomotoren oder dergleichen umfassen können und welche zur Hin- und Herbewegung der Dosieröffnung des Dosierorgans relativ zu der Verteilerscheibe - und in speziellen Fällen auch relativ zu der im Allgemeinen stationär in Bezug auf den Behälter angeordneten Auslauföffnung - ausgebildet sind, wobei diese Hin- und Herbewegung, wie oben angedeutet, eine translatorische und/oder eine rotatorische Bewegung sein kann. Die Steuerung bzw. Regelung des Aktuators der Einrichtung zur Verstellung des Aufgabepunktes in Abhängigkeit der gewünschten Verteilungsbreite übernimmt bei automatischen Maschinen eine programmtechnisch eingerichtete Steuer- und/oder Regeleinrichtung des Scheibenstreuers, welche üblicherweise mit wenigstens einem Bedienmodul in Wirkverbindung steht, welches beispielsweise im Führerhaus einer Zugmaschine, wie eines Traktors, angeordnet sein kann. Entsprechendes gilt in der Regel für die Steuerung bzw. Regelung des Dosierorgans in Abhängigkeit von dem gewünschten Massenstrom des auszubringenden Verteilgutes. Sofern der Scheibenstreuer keine Einrichtung zur Verstellung des Aufgabepunktes aufweist, kann die Auslauföffnung aus dem Vorratsbehälter auch identisch mit der Dosieröffnung des Dosierorgans sein.

Ein derartiger Scheibenstreuer für landwirtschaftliche Zwecke ist beispielsweise aus der DE 10 2007 053 550 A1 bekannt, wobei der Scheibenstreuer in Form eines Zweischeibenstreuers ausgebildet ist, dessen Vorratsbehälter wenigstens zwei mit seitlichem Abstand voneinander angeordnete Auslauföffnungen aufweist. Einer jeweiligen Auslauföffnung des Vorratsbehälters ist je ein Dosierorgan mit je einer Dosieröffnung nachgeordnet, wobei unterhalb einer jeweiligen Dosieröffnung je eine, um je eine Drehachse rotierbare Verteilerscheibe angeordnet ist.

Im Falle von Winterdienststreumaschinen dient der Vorratsbehälter vornehmlich zur Aufnahme von in der Regel granulatförmigem Splitt und/oder Streusalz, wobei die Funktion einer solchen Winterdienststreumaschine weitestgehend jener einer oben beschriebenen landwirtschaftlichen Streumaschine entspricht. Winterdienststreumaschinen können gleichfalls mehrere oder insbesondere zwei Verteilerscheiben, oder auch nur eine Verteilerscheibe aufweisen, welche üblicherweise gleichfalls mit Wurfflügeln versehen sind.

Ferner sind beispielsweise aus der DE 39 06 756 A1 oder aus der EP 0 380 040 B1 Zweischeibenstreuer bekannt, bei welchen sich an die Dosieröffnung eines jeweiligen Dosierorgans nach unten in Richtung einer jeweiligen Verteilerscheibe je ein Auslaufschacht erstreckt, welcher die Dosieröffnung um einen Teil deren Umfangs umgibt und nach unten hin offen ausgestaltet ist, so dass der mittels des Dosierorgans eingestellte Massenstrom an Verteilgut durch den Auslaufschacht hindurchfällt, bevor er auf die darunter liegende Verteilerscheibe bzw. gegen deren Wurfflügel auftrifft. Während ein solcher Auslaufschacht das herabfallende Verteilgut einerseits vor äußeren Einwirkungen, wie insbesondere Windeinflüssen, bewahren kann, besteht sein Zweck andererseits darin, sogenannte Prallverluste und Mengenfehler zu verringern, wie sie bei gattungsgemäßen Scheibenstreuern insbesondere bei relativ großen Massenströmen an Verteilgut bzw. bei großen Fahrgeschwindigkeiten und/oder Arbeitsbreiten auftreten. Unter Prallverlusten werden dabei insbesondere im mittleren Bereich der Querverteilung an Verteilgut auf dem Boden auftretende Überdüngungen verstanden, welche darauf zurückzuführen sind, dass diejenigen Verteilgutpartikel, welche nicht kontrolliert von den Wurfflügeln der Verteilerscheibe erfasst werden, beim Eintreten des Wurfflügels in den herabfallenden Verteilgutstrahl infolge Prallvorgängen in beliebige Richtungen beschleunigt bzw. abgelenkt werden. Demgegenüber entsteht der sogenannte Mengeneffekt, welcher sich auch durch das übliche Anschlussfahren entlang zweier paralleler Fahrgassen auf dem Feld nicht beseitigen lässt, durch unterschiedliche Beladungen der Wurfflügel der Verteilerscheiben mit Verteilgut bei verschiedenen Massenströmen. Während bei kleinen Massenströmen einzelne Verteilgutpartikel mit hoher Geschwindigkeit nach außen beschleunigt werden und deshalb früher das Wurfflügelende erreichen, also früher abwerfen (es wird mehr in die Mitte gestreut), "füllt" sich der Wurfflügel mit steigendem Massenstrom an Verteilgut, so dass das Verteilgut-Haufwerk langsamer entlang dem Wurfflügel nach außen rutscht und deshalb später abgeworfen wird (es wird mehr nach außen gestreut).

Ein Nachteil bei bekannten Auslaufschächten von Scheibenstreuern besteht insbesondere darin, dass äußere Einflüsse nicht vollständig eliminiert werden können und nach wie vor die Gefahr besteht, dass der dosierte Verteilgutstrom seitlich abgelenkt und von den Wurfflügeln der Verteilerscheibe nicht in der vorgesehenen Weise erfasst wird.

Der Erfindung liegt daher die Aufgabe zugrunde, einen Scheibenstreuer der eingangs genannten Art auf einfache und kostengünstige Weise dahingehend weiterzubilden, dass unter zumindest weitgehender Vermeidung der vorgenannten Nachteile Streufehler infolge einer Ablenkung des auf die Verteilerscheibe auftreffenden, dosierten Massenstroms an Verteilgut, welche mit einer unbeabsichtigten Verschiebung des Aufgabepunktes einhergehen, minimiert werden.

Erfindungsgemäß wird diese Aufgabe bei einem Scheibenstreuer der eingangs genannten Art dadurch gelöst, dass sich der Auslaufschacht an seinem der Verteilerscheibe zugewandten, freien Ende im Wesentlichen vollumfänglich um die Dosieröffnung herum erstreckt, wobei der Auslaufschacht im Bereich seines der Verteilerscheibe abgewandten Endes wenigstens einen Durchlass aufweist.

Die erfindungsgemäße Ausgestaltung des Auslaufschachtes des Scheibenstreuers stellt eine rein mechanische sowie in konstruktiver Hinsicht sehr einfache und kostengünstige Weiterbildung bekannter Auslaufschächte dar, welche sich stets nur um einen Teilumfang der Auslauföffnung des Vorratsbehälters und/oder der Dosieröffnung des Dosierorgans herum erstrecken, indem sich der Auslaufschacht erfindungsgemäß an seinem der Verteilerscheibe zugewandten bzw. der Dosieröffnung des Dosierorgans (bzw. der Auslauföffnung des Vorratsbehälters) abgewandten, freien (unteren) Ende im Wesentlichen vollumfänglich um die Dosieröffnung herum erstreckt, so dass ein an seinem freien, der Verteilerscheibe zugewandten (unteren) Ende vollumfänglich geschlossener Auslaufschacht gebildet ist und äußere Einflüsse auf den aus der Dosieröffnung auf die Verteilerscheibe herabfallenden, dosierten Verteilgutstrom praktisch ausgeschlossen werden. Da es bei einem solchen "geschlossenen" Auslaufschacht infolge der rotierenden Verteilscheibe allerdings je nach Drehzahl zu einer nicht unerheblichen Sogwirkung kommen kann, welche ihrerseits zu einer gerade zu vermeidenden, unkontrollierten seitlichen Ablenkung des Verteilgutstroms führen kann, sieht die Erfindung ferner den wenigstens einen, zum Druckausgleich dienenden Durchlass in einer Umfangswand des Auslaufschachtes vor, welcher im Bereich des der Verteilerscheibe abgewandten bzw. der Dosieröffnung des Dosierorgans (bzw. der Auslauföffnung) zugewandten (oberen) Endes des Auslaufschachtes angeordnet ist, wo der dosiere Massenstrom an Verteilgut gerade aus der Auslauföffnung bzw. aus der Dosieröffnung herausfällt, ohne dass die Gefahr einer seitlichen Ablenkung und einer hierdurch bedingen Verlagerung des Aufgabepunktes des Verteilgutes auf die Verteilerscheibe besteht, wie es im freien Fall des Massenstroms an Verteilgut nahe der Verteilerscheibe bzw. deren Wurfflügel der Fall wäre, was insbesondere - wenngleich nicht ausschließlich - dann gilt, wenn die Verteilerscheibe mit einer großen Drehzahl rotiert und somit einen relativ großen Sogeffekt verursacht. Folglich werden Falschdosierungen aufgrund Abweichungen des Ergebnisses einer Abdrehprobe (bei ruhender Verteilerscheibe) von dem während des Betriebs dosierten Massenstrom an Verteilgut (bei rotierender Verteilerscheibe) infolge eines - erfindungsgemäß eliminierten - Sogeffektes ebenso vermieden wie Fehler des Streubildes aufgrund unkontrollierter seitlicher Ablenkungen des auf die Verteilerscheibe bzw. auf deren Wurfflügel auftreffenden Massenstroms an Verteilgut, welcher durch den Auslaufschacht hindurch fällt.

Während das Dosierorgan grundsätzlich von beliebiger bekannter Bauart sein kann, kann es vorzugsweise einen mit der Dosieröffnung zusammenwirkenden, insbesondere um eine im Wesentlichen vertikale, also um eine etwa parallel zur Drehachse der Verteilerscheibe angeordnete, Schwenkachse verschwenkbaren Dosierschieber aufweisen, welcher zwischen einer Schließposition, in welcher er die Dosieröffnung gänzlich verschließt, und mehreren Öffnungspositionen, in welcher er die Dosieröffnung teilweise und/oder gänzlich freigibt, verlagerbar ist, wie dies bei den meisten kommerziell erhältlichen Scheibenstreuern der Fall ist.

Der erfindungsgemäße Auslaufschacht kann im Bereich seines der Verteilerscheibe abgewandten Endes grundsätzlich nur einen oder insbesondere auch eine Mehrzahl an Durchlässen, wie beispielsweise zwei oder drei Durchlässe, aufweisen, welche hinsichtlich einer höheren mechanischen Stabilität des Auslaufschachtes sowie insbesondere hinsichtlich einer Verteilung des Druckausgleichs zur Verhinderung einer Sogwirkung auf eine breitere Fläche von Vorteil sein können.

Um für einen zuverlässigen Druckausgleich zur Verhinderung eines Sogeffektes bei gleichzeitig sicherem Schutz des dosierten Massenstroms an Verteilgut vor äußeren Einwirkungen zu sorgen, hat es sich als vorteilhaft erwiesen, wenn sich der wenigstens eine Durchlass um einen Umfangsabschnitt des Auslaufschachtes von wenigstens etwa 30°, insbesondere von wenigstens etwa 45°, vorzugsweise von wenigstens 60°, wie beispielsweise von wenigstens etwa 75°, erstreckt, wobei sich der wenigstens eine Durchlass andererseits vorzugsweise um einen Umfangsabschnitt des Auslaufschachtes von höchstens etwa 180°, insbesondere von höchstens etwa 150°, vorzugsweise von höchstens etwa 120°, wie beispielsweise von höchstens etwa 105°, erstreckt.
im Hinblick auf die Gesamtfläche des wenigstens einen Durchlasses oder der mehreren Durchlässe des Auslaufschachtes hat sich herausgestellt, dass die Gesamtfläche des wenigstens einen Durchlasses wenigstens etwa 5%, insbesondere wenigstens etwa 8%, der gesamten Umfangsfläche des Auslaufschachtes betragen sollte, wobei es in aller Regel ausreicht, wenn die Gesamtfläche des wenigstens einen Durchlasses höchstens etwa 25%, insbesondere höchstens etwa 20%, der gesamten Umfangsfläche des Auslaufschachtes beträgt.

Um für einen größtmöglichen Schutz des durch den Auslaufschacht herabfallenden Massenstroms an Verteilgut zu sorgen, kann gemäß einer bevorzugten Ausführungsform vorgesehen sein, dass sich der Auslaufschacht von unmittelbar unterhalb des Dosierorgans bis unmittelbar oberhalb der Verteilerscheibe oder deren Wurfflügel erstreckt.

Gemäß einer weiteren bevorzugten Ausführungsform kann vorgesehen sein, dass der Auslaufschacht an seinem der Verteilerscheibe zugewandten bzw. dem Dosierorgan abgewandten, freien (unteren) Ende mit elastisch nachgiebigen Materialstreifen, wie Borsten, Borstenbündel oder dergleichen, ausgestattet ist, welche sich zumindest um einen Umfangsabschnitt des Auslaufschachtes in Richtung der Verteilerscheibe, insbesondere im Wesentlichen um den gesamten Umfang des Auslauflaufschachtes, erstrecken.

Die elastisch nachgiebigen Materialstreifen erstrecken sich in diesem Fall vorzugsweise von dem der Verteilerscheibe zugewandten bzw. dem Dosierorgan abgewandten, freien (unteren) Ende des Auslaufschachtes bis unmittelbar oberhalb der Verteilerscheibe oder deren Wurfflügel, wobei eine solche Ausgestaltung des Auslaufschachtes mit an seinem freien Ende, insbesondere im Wesentlichen vollumfänglich, nach unten vorstehenden, elastisch nachgiebigen Materialstreifen auch die Möglichkeit gibt, dass die freien Enden der Materialstreifen bis an das freie Ende der Wurfschaufeln heranreichen. Die elastisch nachgiebigen Materialstreifen des Auslaufschachtes können dabei zweckmäßigerweise aus einem, insbesondere verschleißfesten, Kunststoffmaterial gefertigt sein.

Der Auslaufschacht kann seinerseits vorzugsweise aus einem Kunststoffwerkstoff gebildet sein, bei welchem es sich vorteilhafterweise um einen Kunststoffwerkstoff auf der Basis von thermoplastischen Polymeren handeln kann. Dies erleichtert einerseits das Recycling und erhöht somit die Umweltfreundlichkeit, andererseits geben thermoplastische Polymere insbesondere die Möglichkeit, dass der Auslaufschacht in Form eines Spritzgussteils oder eines 3D-Druckteils ausgebildet sein kann.

Wie bereits angedeutet, kann es sich bei dem erfindungsgemäßen Scheibenstreuer im Übrigen insbesondere um einen Zweischeibenstreuer handeln, dessen Vorratsbehälter wenigstens zwei mit seitlichem Abstand voneinander angeordnete Auslauföffnungen aufweist, wobei einer jeweiligen Auslauföffnung des Vorratsbehälters je ein Dosierorgan mit je einer Dosieröffnung nachgeordnet ist, wobei unterhalb einer jeweiligen Dosieröffnung je eine, um je eine Drehachse rotierbare Verteilerscheibe angeordnet ist, und wobei sich von einer jeweiligen Dosieröffnung nach unten in Richtung der jeweiligen Verteilerscheibe je ein Auslaufschacht der vorgenannten Art erstreckt, welcher sich an seinem der Verteilerscheibe zugewandten bzw. dem Dosierorgan abgewandten, freien (unteren) Ende im Wesentlichen vollumfänglich um die Dosieröffnung herum erstreckt, wobei ein jeweiliger Auslaufschacht im Bereich seines der jeweiligen Verteilerscheibe abgewandten bzw. dem Dosierorgan zugewandten (oberen) Endes je wenigstens einen Durchlass aufweist.

Bei einem solchen Zweischeibenstreuer, bei welchem die Verteilerscheiben üblicherweise eine entgegengesetzte Drehrichtung aufweisen, wobei sich die - in Fahrtrichtung betrachtet - rechte Verteilerscheibe entgegen dem Uhrzeigersinn und die - wiederum in Fahrtrichtung betrachtet - linke Verteilerscheibe im Uhrzeigersinn dreht, kann in vorteilhafter Ausgestaltung vorgesehen sein, dass der wenigstens eine Durchlass in einem Umfangsbereich des Auslaufschachtes angeordnet ist, welcher sich in einem - in Fahrtrichtung betrachtet - vorderen und/oder seitlich äußeren Umfangsabschnitt des Auslaufschachtes erstreckt. Auf diese Weise ist sichergestellt, dass der wenigstens eine Durchlass - in Dreh- bzw. Umfangsrichtung einer jeweiligen Verteilerscheibe betrachtet - stromab des Auftreffpunktes des dosierten Massenstroms an Verteilgut auf die Wurfschaufeln der Verteilerscheibe angeordnet ist, so dass für hierdurch bedingte Druckstöße ein zuverlässiger Druckausgleich durch den wenigstens einen Durchlass gegeben ist, ohne dass eine seitliche Ablenkung des Massenstroms an Verteilgut erfolgt, die in einer Verlagerung des Aufgabepunktes resultieren würde.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische Seitenansicht einer Ausführungsform eines Scheibenstreuers in Form eines als landwirtschaftliches Anbaugerät ausgestalteten Zweischeibenstreuers, welcher von dem Dreipunkt-Kraftheber einer Zugmaschine, wie eines Traktors, aufnehmbar ist, vom Heck aus betrachtet;

- Fig. 2: eine abgebrochen dargestellte, schematische perspektivische Ansicht eines an der Unterseite eines der beiden Behälterteile des Vorratsbehälters des Scheibenstreuers gemäß Fig. 1 angeordneten Bodens mit einer Auslauföffnung von oben;
- Fig. 3: eine schematische perspektivische Detailansicht des mit der Auslauföffnung versehenen Bodens entsprechend dem Ausschnitt A der Fig. 2 einschließlich einem darüber angeordneten Rührwerk und einer darunter angeordneten Dosieröffnung eines Dosierorgans;
- Fig. 4: eine schematische perspektivische Detailansicht eines der Unterteile des Vorratsbehälters des Scheibenstreuers gemäß Fig. 1 mit der Auslauföffnung sowie dem darunter angeordneten Auslaufschacht und der mit Wurfflügeln versehenen Verteilerscheibe, wobei das Dosierorgan aus Veranschaulichungsgründen weggelassen worden ist;
- Fig. 5: eine schematische perspektivische Detailansicht des Auslaufschachtes gemäß Fig. 4 von schräg oben betrachtet; und
- Fig. 6: eine schematische perspektivische Detailansicht des Auslaufschachtes gemäß Fig. 4 und 5 von schräg unten betrachtet.

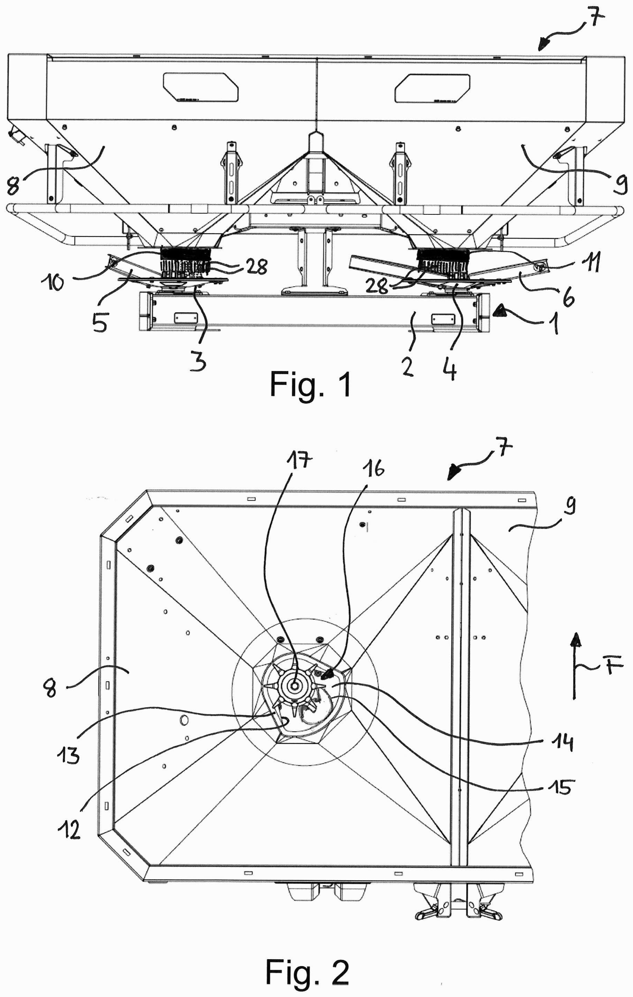

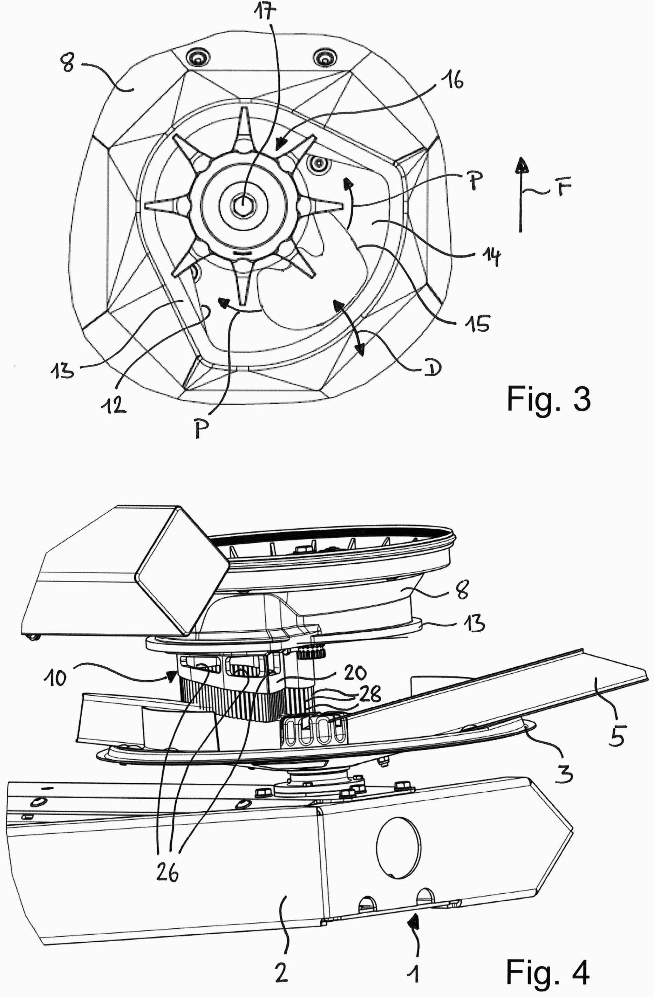

In der Fig. 1 ist eine Ausführungsform eines erfindungsgemäßen - im vorliegenden Fall als Zweischeibenstreuer ausgebildeten - Scheiben- oder Schleuderstreuers exemplarisch wiedergegeben. Der Scheibenstreuer weist einen Rahmen 1 mit einer Quertraverse 2 auf, welche z.B. im Falle eines von der Zapfwelle einer Zugmaschine, wie eines Traktors, abgeleiteten mechanischen Antriebs der Verteilerscheiben 3, 4, welche mit Wurfflügeln bzw. -schaufeln 5, 6 versehen sind, einen Quertrieb aufnimmt. Im Falle eines drehzahlregelbaren, hydraulischen oder elektrischen Antriebs sind z.B. die einer jeden Verteilerscheibe 3, 4 zugeordneten Hydro- bzw. Elektromotoren (nicht gezeigt) an der Quertraverse 2 festgelegt. Die Verteilerscheiben 3, 4 werden auf diese Weise während des Betriebs in üblicherweise entgegengesetzte Drehrichtungen versetzt, wobei sich die - in Fahrtrichtung F betrachtet (vgl. die Fig. 2 und 3) - rechte Verteilerscheibe entgegen dem Uhrzeigersinn und die - wiederum in Fahrtrichtung F betrachtet - linke Verteilerscheibe im Uhrzeigersinn dreht, wenn man die Verteilescheiben 3, 4 von oben betrachtet. Der Scheibenstreuer umfasst ferner einen Vorratsbehälter 7, welcher im vorliegenden Fall zwei trichterförmige Behälterteile 8, 9 umfasst, an deren in der Fig. 1 nicht erkennbaren Auslauföffnung sich nach unten die Dosieröffnung jeweils eines in der Fig. 1 gleichfalls nicht erkennbaren Dosierorgans anschließt. An die Dosieröffnung eines jeweiligen Dosierorgans schließt sich wiederum nach unten jeweils ein Auslaufschacht 10, 11 an, welcher sich von unmittelbar unterhalb eines jeweiligen Dosierorgans bis unmittelbar oberhalb der einer jeweiligen Verteilerscheibe 3, 4 bzw. deren Wurfflügel 5, 6 erstreckt und - wie weiter unten unter Bezugnahme auf die Fig. 4 bis 6 noch näher erläutert - den gesamten Umfang der Dosieröffnung umgibt, so dass das mittels eines jeweiligen Dosierorgans dosierte Verteilgut durch den nach unten offenen Auslaufschacht 10, 11 auf die jeweilige Verteilerscheibe 3, 4 fällt und von deren Wurfflügel 5, 6 erfasst wird.

Wie der Fig. 2 und insbesondere der Fig. 3 zu entnehmen ist, befindet sich an der Unterseite eines jeden, sich im Wesentlichen trichterförmig nach unten verjüngen Behälterteils 8, 9 eine Auslauföffnung 12. Letztere ist beim vorliegenden Ausführungsbeispiel etwa ringförmig ausgestaltet und in einem diese umgrenzenden Boden 13 exzentrisch angeordnet. Unterhalb der etwa ringförmigen, die Auslauföffnungen 12 des Vorratsbehälters 7 begrenzenden Böden 13 ist jeweils ein Dosierorgan angeordnet, welches je ein, mittels je einer nicht gezeigten Einrichtung zur Verstellung des Aufgabepunktes des Verteilgutes auf die Verteilerscheibe 3, 4 beispielsweise aktuatorisch hin und her bewegbares, z.B. etwa plattenförmiges Dosierteil 14 mit einer Dosieröffnung 15 aufweist. Der freie Querschnitt der Dosieröffnung 15 ist mittels eines, insbesondere gleichfalls aktuatorisch betätigten, Dosierschiebers zur Einstellung der Streumenge steuerbar. Der zeichnerisch nicht erkennbare Dosierschieber ist unterhalb der Dosieröffnung 15 an einer vertikalen, d.h. parallel zur Drehachse der Verteilerscheiben 3, 4 angeordneten, Schwenkachse schwenkbar gelagert und zwischen einer Schließstellung, in welcher er die Dosieröffnung 15 gänzlich verschließt (nicht gezeigt), und der in den Fig. 2 und 3 erkennbaren Öffnungsstellung, in welcher er die Dosieröffnung 15 gänzlich freigibt, sowie beliebigen Zwischenpositionen, in welcher er die Dosieröffnung 15 teilweise freigibt, verlagerbar, wie dies durch den Pfeil D in der Fig. 3 angedeutet ist.

Wie aus den Fig. 2 und 3 ferner ersichtlich, ist der Auslauföffnung 12 eines jeden Behälterteils 8, 9 des Vorratsbehälters 7 ein unmittelbar oberhalb eines jeden Bodens 13 angeordnetes Rührwerk 16 zugeordnet, dessen vertikale Drehachse 17 z.B. mit jener der Verteilerscheiben 3, 4 zusammenfällt. Die Drehachse 17 des Rührwerks 16 kann beispielsweise in dem jeweiligen Boden 13 gelagert und von einem im Übrigen nicht näher dargestellten, steuerbaren Antrieb drehangetrieben sein. Die Anordnung der Rührwerke 16 ist derart gewählt, dass der Raum unterhalb der in dem jeweiligen Boden 13 angeordneten Auslauföffnung 12 einerseits und der zugehörigen Verteilerscheibe 3, 4 andererseits frei bleibt, so dass das Verteilgut durch den Auslaufschacht 10, 11 (vgl. die Fig. 1) behinderungsfrei auf die Verteilerscheibe 3, 4 gelangen kann. Auf diese Weise werfen die Verteilerscheiben 3, 4 (Fig. 1) mit den Enden ihrer Wurfflügel 5, 6 das Verteilgut in je einem Streufächer ab, welche sich teilweise überlappen und ein flach dreieckförmiges Streubild ergeben. Beim Anschlussfahren entsteht hieraus eine lineare Verteilung. Die eine Verteilerscheibe 3, 4 wirft dabei das Verteilgut bis etwa auf die halbe Arbeitsbreite auf die andere Seite, so dass auch ein Grenzstreuen möglich ist. Indes lässt sich die vorliegende Erfindung selbstverständlich auch in jede andere Bauart eines Ein- oder Zweischeibenstreuers für landwirtschaftliche oder winterdienstliche Zwecke implementieren.

Oberhalb eines jeweiligen Rührwerks 16 kann ferner zweckmäßigerweise eine Rückhalteeinrichtung, wie in Form eines nicht dargestellten Siebs, Rostes, Gitters oder dergleichen, in den unteren Bereich des Behälterunterteils 8, 9 eingelegt sein, welche zum Zurückhalten von Fremdkörpern, wie Steinen, Erdklumpen und dergleichen, aber auch von verbackenen Verteilgutagglomerationen dient, so dass diese nicht an das Dosierorgan bzw. in den Auslaufschacht 10, 11 gelangen und dort zu Verstopfungen führen können.

Wie bereits angedeutet, ist unterhalb der in dem Boden 13 gebildeten Auslauföffnung 12 das mit der Dosieröffnung 15, welche mit dem Dosierschieber blendenartig zusammenwirkt, versehene - beim vorliegenden Ausführungsbeispiel etwa plattenförmige - Dosierteil 14 eines jeweiligen Dosierorgans mittels der Einrichtung zur Verstellung des Aufgabepunktes z.B. aktuatorisch hin und her verlagerbar, wobei diese Hin- und Herbewegung des plattenförmigen Dosierteils 14 beim vorliegenden Ausführungsbeispiel eine Drehbewegung um die Achse 17 - also koaxial zur Drehachse des Rührwerks 16 sowie koaxial zur Drehachse einer jeweiligen Verteilerscheibe 3, 4 - ist (vgl. den Pfeil P der Fig. 3), um den Aufgabepunkt des Verteilgutes auf die Verteilerscheibe 3, 4 in Umfangsrichtung derselben einstellen zu können. Zum Verlagern der durch die Lage einer jeweiligen Dosieröffnung 15 eines jeweiligen Dosierteils 14 bestimmten Aufgabepunkte auf die Verteilerscheiben 3, 4 lassen sich die Dosierteile 14 folglich mittels je einer nicht näher gezeigten Einrichtung zur Verlagerung des Aufgabepunktes um ihr Drehzentrum 17 verdrehen. Bei der Einrichtung zur Verlagerung des Aufgabepunktes kann es sich beispielsweise um eine solche handeln, wie sie als solche aus der DE 10 2012 024 363 A1 bekannt ist.

Den Fig. 4 bis 6 ist jeweils eine Ausführungsform des Auslaufschachtes 10 der Fig. 1 zu entnehmen, wobei auf eine detaillierte Darstellung des anderen Auslaufschachtes 11 im Hinblick auf dessen entsprechende, aber spiegelsymmetrische Ausgestaltung verzichtet wird. Wie aus den Fig. 4 bis 6 ersichtlich, weist der Auslaufschacht 10 eine Umfangswand 20 auf, welche im vorliegenden Fall im Wesentlichen an den Umfang der Dosieröffnung 15 angepasst ist und sich mit ihrem der Verteilerscheibe 3 (vgl. die Fig. 4) zugewandten bzw.

dem Boden 13 mit der Auslauföffnung 12 und dem Dosierteil 14 mit der Dosieröffnung 15 abgewandten Ende vollumfänglich um die Dosieröffnung 15 herum erstreckt. Der Auslaufschacht 10 kann dabei beispielsweise an der Unterseite des mit der Dosieröffnung 15 versehenen Dosierteils 14 lösbar festlegbar sein. Zu diesem Zweck umfasst der Auslaufschacht 10 bei dem gezeigten Ausführungsbeispiel eine Befestigungseinrichtung 21 mit einerseits zwei mit Abstand voneinander angeordneten, z.B. etwa U-förmigen Aufnahmen 22, 23, welche an seitlich von der Umfangswand 20 des Auslaufschachtes 10 vorstehenden Trägern 24 angeordnet sind, um die Aufnahmen 22, 23 beispielsweise an hierzu komplementären Bolzen (nicht gezeigt) an der Unterseite des mit der Dosieröffnung 15 versehenen Dosierteils 14 lösbar in Eingriff zu bringen. Andererseits umfasst die Befestigungseinrichtung 21 z.B. eine mit seitlichem Abstand von Aufnahmen 22, 23 angeordnete Befestigungsbohrung 25, welche ihrerseits zur Aufnahme einer Schraube oder ähnlichem dient, um den Auslaufschacht 10 an dem Dosierteil 14 befestigen zu können.

Es sei an dieser Stelle der Vollständigkeit darauf hingewiesen, dass die Auslaufschächte 10, 11 nicht notwendigerweise eine zu der Dosieröffnung 15 komplementäre Querschnittsform aufweisen müssen, sondern grundsätzlich beispielsweise auch am Umfang der Auslauföffnung 12 (vgl. die Fig. 2 und 3) angeordnet sein können, wenn letztere mit der Dosieröffnung 15 zusammenfällt. Hierbei kann es sich insbesondere dann, wenn der Scheibenstreuer keine Einrichtung zur Verlagerung des Aufgabepunktes des Streugutes auf die Verteilerscheiben 3, 4 aufweist (nicht gezeigt), bei der Auslauföffnung und bei der Dosieröffnung um ein und dieselbe Öffnung am Boden des Vorratsbehälters 7 bzw. eines jeweiligen Behälterteils 8, 9 handeln.

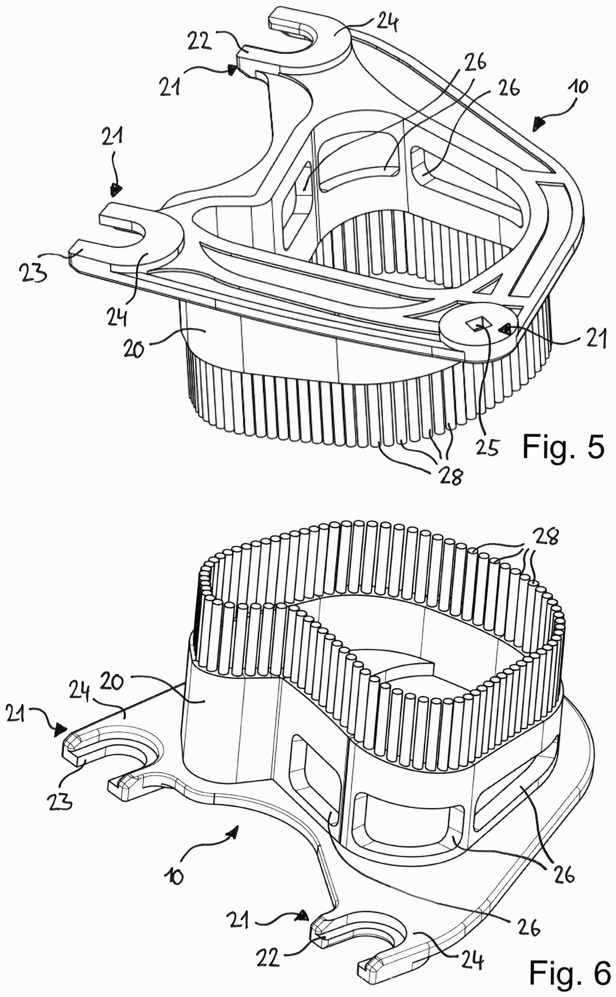

Wie weiterhin insbesondere den Fig. 5 und 6, aber auch der Fig. 4 zu entnehmen ist, weist der Auslaufschacht 10 im Bereich seines der Verteilerscheibe 3 abgewandten (oberen) Endes wenigstens einen Durchlass 26 - im vorliegenden Fall drei Durchlässe 26 - auf, welche in der Umfangswand 20 des Auslaufschachtes 10 z.B. in Umfangsrichtung nebeneinander auf einem Höhenniveau nahe der Befestigungseinrichtung 21 angeordnet sind und zum Druckausgleich dienen, um eine Sogwirkung im Innern des vollumfänglich geschlossenen Auslaufschachtes 10 zu verhindern, wenn die Verteilerscheibe 3 rotiert wird. Während die Durchlässe 26 bei dem zeichnerisch wiedergegebenen Ausführungsbeispiel vornehmlich rechteckig mit abgerundeten Ecken sind, können sie selbstverständlich auch praktisch beliebige andersartige geometrisch Formen besitzen, wie z.B. rund, oval, mehreckig etc.

Der Auslaufschacht 10 ist an seinem der Verteilerscheibe 3 zugewandten, freien (untere) Ende ferner mit elastisch nachgiebigen Materialstreifen 28, wie Borsten, Borstenbündel oder dergleichen, ausgestattet, welche sich gleichfalls um den gesamten Umfang des Auslaufschachtes 10 in Richtung der Verteilerscheibe 3 und insbesondere bis unmittelbar oberhalb der Verteilerscheibe 3 oder deren Wurfflügel 5 erstrecken. Bei dem gezeigten Ausführungsbeispiel besitzen die elastisch nachgiebigen Materialstreifen 28 alle etwa dieselbe Länge, wobei ihre Enden insbesondere in einer horizontalen Ebene unmittelbar oberhalb der mit den Wurfflügeln 5 versehenen Verteilerscheibe 3 angeordnet sind. Während die elastisch nachgiebigen Materialstreifen 28 beispielsweise aus einem, insbesondere verschleißfesten, Kunststoffmaterial gefertigt sein können, ist der Auslaufschacht 10 mit seiner Umfangswand 20 und der Befestigungseinrichtung 21 vorzugsweise aus einem thermoplastischen Kunststoffwerkstoff gebildet, wobei er insbesondere in Form eines Spritzgussteils oder eines 3D-Druckteils ausgestaltet sein kann.

Was die Durchlässe 26 in der Umfangswand 20 des Auslaufschachtes 10 betrifft, so ist deren Gesamtfläche beispielsweise derart bemessen, dass sie etwa 10% der gesamten Umfangsfläche des Auslaufschachtes 10 - oder genauer: der Umfangswand 10 einschließlich der nachgiebig elastischen Materialstreifen 28 - beträgt, so dass ein hinreichender Druckausgleich zur Verhinderung eines Sogeffektes sichergestellt ist. Aus entsprechenden Gründen erstrecken sich die - im vorliegenden Fall drei - Durchlässe 26 um etwa ein Viertel des Umfangs der Umfangswand 20 des Auslaufschachtes 10. Darüber hinaus kann es sich als zweckmäßig erweisen, wenn die Durchlässe 26 in einem Umfangsbereich der Umfangswand 20 des Auslaufschachtes 10 angeordnet ist, welcher sich in einem - in Fahrtrichtung F betrachtet (vgl. die Fig. 2 und 3) - vorderen und/oder seitlich äußeren Umfangsabschnitt des Auslaufschachtes 10 erstreckt, wie beispielsweise um einen Umfangsabschnitt des Auslaufschachtes 10 von etwa 90° entsprechend einem Viertel des Umfangsbereichs der Umfangswand 20, wobei sich dieser Umfangsabschnitt mit einem Bogenmaß von etwa 90° von der - in Fahrtrichtung F betrachtet - vorderen Seite des Auslaufschachtes 10 bis zu seiner seitlich äußeren Seite desselben erstreckt. Somit ist sichergestellt, dass zumindest einer der Durchlässe 26 - in Dreh- bzw. Umfangsrichtung einer jeweiligen Verteilerscheibe 10 betrachtet - stromab des Auftreffpunktes des dosierten Massenstroms an Verteilgut auf die Wurfschaufeln 5 der Verteilerscheibe 3 positioniert ist, so dass für hierdurch bedingte Druckstöße ein einwandfreier Druckausgleich durch die Durchlässe 26 gegeben ist, ohne dass eine seitliche Ablenkung des Massenstroms an Verteilgut erfolgt, die in einer Verlagerung des Aufgabepunktes resultieren würde.

## Patentansprüche

1. Scheibenstreuer zum Verteilen von Verteilgut, mit einem Vorratsbehälter (7) zur Aufnahme des Verteilgutes mit wenigstens einer Auslauföffnung (12), wenigstens einem, der Auslauföffnung (12) des Vorratsbehälters (7) nachgeordneten Dosierorgan mit einer Dosieröffnung (15) und wenigstens einer unterhalb der Dosieröffnung (15) angeordneten, um eine Drehachse rotierbaren Verteilerscheibe (3, 4), wobei sich von der Dosieröffnung (15) nach unten in Richtung der Verteilerscheibe (3, 4) ein Auslaufschacht (10, 11) erstreckt, welcher zumindest einen Umfangsabschnitt der Dosieröffnung (15) umgibt, **dadurch gekennzeichnet, dass** sich der Auslaufschacht (10, 11) an seinem der Verteilerscheibe (3, 4) zugewandten, freien Ende im Wesentlichen vollumfänglich um die Dosieröffnung (15) herum erstreckt, wobei der Auslaufschacht (10, 11) im Bereich seines der Verteilerscheibe (3, 4) abgewandten Endes wenigstens einen Durchlass (26) aufweist.

2. Scheibenstreuer nach Anspruch 1, **dadurch gekennzeichnet, dass** das Dosierorgan einen mit der Dosieröffnung (15) zusammenwirkenden, insbesondere um eine im Wesentlichen vertikale Schwenkachse verschwenkbaren, Dosierschieber aufweist, welcher zwischen einer Schließposition, in welcher er die Dosieröffnung (15) gänzlich verschließt, und mehreren Öffnungspositionen, in welcher er die Dosieröffnung (15) teilweise und/oder gänzlich freigibt, verlagerbar ist.

3. Scheibenstreuer nach Anspruch 1 oder 2, **dadurch gekennzeichnet, dass** der Auslaufschacht (10, 11) im Bereich seines der Verteilerscheibe (3, 4) abgewandten Endes eine Mehrzahl an Durchlässen (26), insbesondere zwei oder drei Durchlässe (26), aufweist.

4. Scheibenstreuer nach einem der Ansprüche 1 bis 3, **dadurch gekennzeichnet, dass** sich der wenigstens eine Durchlass um einen Umfangsabschnitt des Auslaufschachtes (10, 11)
- von wenigstens 30°, insbesondere von wenigstens 45°, vorzugsweise von wenigstens 60°, und/oder
- von höchstens 180°, insbesondere von höchstens 150°, vorzugsweise von höchstens 120°,
erstreckt.

5. Scheibenstreuer nach einem der Ansprüche 1 bis 4, **dadurch gekennzeichnet, dass** die Gesamtfläche des wenigstens einen Durchlasses (26) des Auslaufschachtes (10, 11)
- wenigstens 5%, insbesondere wenigstens 8%, und/oder
- höchstens 25%, insbesondere höchstens 20%,
der gesamten Umfangsfläche des Auslaufschachtes (10, 11) beträgt.

6. Scheibenstreuer nach einem der Ansprüche 1 bis 5, **dadurch gekennzeichnet, dass** sich der Auslaufschacht (10, 11) von unmittelbar unterhalb des Dosierorgans bis unmittelbar oberhalb der Verteilerscheibe (3, 4) oder deren Wurfflügel (5, 6) erstreckt.

7. Scheibenstreuer nach einem der Ansprüche 1 bis 6, **dadurch gekennzeichnet, dass** der Auslaufschacht (10, 11) an seinem der Verteilerscheibe (3, 4) zugewandten, freien Ende mit elastisch nachgiebigen Materialstreifen (28), wie Borsten, Borstenbündel oder dergleichen, ausgestattet ist, welche sich zumindest um einen Umfangsabschnitt des Auslaufschachtes (10, 11) in Richtung der Verteilerscheibe (3, 4) erstrecken.

8. Scheibenstreuer nach Anspruch 7, **dadurch gekennzeichnet, dass** sich die elastisch nachgiebigen Materialstreifen (28) im Wesentlichen um den gesamten Umfang des Auslaufschachtes (10, 11) erstrecken.

9. Scheibenstreuer nach Anspruch 7 oder 8, **dadurch gekennzeichnet, dass** sich die elastisch nachgiebigen Materialstreifen (28) von dem der Verteilerscheibe (3, 4) zugewandten, freien Ende des Auslaufschachtes (10, 11) bis unmittelbar oberhalb der Verteilerscheibe (3, 4) oder deren Wurfflügel (5, 6) erstrecken.

10. Scheibenstreuer nach einem der Ansprüche 7 bis 9, **dadurch gekennzeichnet, dass** die elastisch nachgiebigen Materialstreifen (28) aus einem, insbesondere verschleißfesten, Kunststoffmaterial gefertigt sind.

11. Scheibenstreuer nach einem der Ansprüche 1 bis 10, **dadurch gekennzeichnet, dass** der Auslaufschacht (10, 11) aus einem Kunststoffwerkstoff gebildet ist.

12. Scheibenstreuer nach Anspruch 11, **dadurch gekennzeichnet, dass** es sich bei dem Kunststoffwerkstoff des Auslaufschachtes (10, 11) um einen Kunststoffwerkstoff auf der Basis von thermoplastischen Polymere handelt, wobei der Auslaufschacht (10, 11) insbesondere in Form eines Spritzgussteils oder eines 3D-Druckteils ausgebildet ist.

13. Scheibenstreuer nach einem der Ansprüche 1 bis 12, **dadurch gekennzeichnet, dass** es sich bei dem Scheibenstreuer um einen Zweischeibenstreuer handelt, dessen Vorratsbehälter (7) wenigstens zwei mit seitlichem Abstand voneinander angeordnete Auslauföffnungen (12) aufweist, wobei einer jeweiligen Auslauföffnung (12) des Vorratsbehälters (7) je ein Dosierorgan mit je einer Dosieröffnung (15) nachgeordnet ist, wobei unterhalb einer jeweiligen Dosieröffnung (15) je eine, um je eine Drehachse rotierbare Verteilerscheibe (3, 4) angeordnet ist, und wobei sich von einer jeweiligen Dosieröffnung (15) nach unten in Richtung der jeweiligen Verteilerscheibe (3, 4) je ein Auslaufschacht (10, 11) **er**streckt, welcher sich an seinem der Verteilerscheibe (3, 4) zugewandten, freien Ende im Wesentlichen vollumfänglich um die Dosieröffnung (15) herum erstreckt, wobei ein jeweiliger Auslaufschacht (10, 11) im Bereich seines der jeweiligen Verteilerscheibe (3, 4) abgewandten Endes je wenigstens einen Durchlass (26) aufweist.

14. Scheibenstreuer nach Anspruch 13, **dadurch gekennzeichnet, dass** der wenigstens eine Durchlass (26) in einem Umfangsbereich des Auslaufschachtes (10, 11) angeordnet ist, welcher sich in einem - in Fahrtrichtung (F) betrachtet - vorderen und/oder seitlich äußeren Umfangsabschnitt des Auslaufschachtes (10, 11) erstreckt.
